## Europäisches Patentamt

## European Patent Office

## Office européen des brevets

(19)

(11) Veröffentlichungsnummer: **0 020 986**
**B1**

(12)

# EUROPÄISCHE PATENTSCHRIFT

(45) Veröffentlichungstag der Patentschrift:
**29.12.82**

(21) Anmeldenummer: **80102603.0**

(22) Anmeldetag: **10.05.80**

(51) Int. Cl.³: **B 01 D 59/00,** G 03 F 1/02

(54) **Verfahren zum Herstellen von Trenndüsenelementen zur Trennung gas- oder dampfförmiger Gemische, insbesondere Isotopengemische.**

(30) Priorität: **02.06.79 DE 2922642**

(43) Veröffentlichungstag der Anmeldung:
**07.01.81 Patentblatt 81/1**

(45) Bekanntmachung des Hinweises auf die Patenterteilung:
**29.12.82 Patentblatt 82/52**

(84) Benannte Vertragsstaaten:
**FR GB IT NL SE**

(56) Entgegenhaltungen:
**DD-A-103 977**
**DD-A-127 137**
**DE-A-2 018 725**
**DE-A-2 227 342**
**DE-A-2 261 123**
**DE-B-2 019 201**
**DE-C-952 496**
**US-A-3 925 677**

(73) Patentinhaber: **Kernforschungszentrum Karlsruhe GmbH, Weberstrasse 5, D-7500 Karlsruhe 1 (DE)**

(72) Erfinder: **Becker, Erwin-Willy, Prof. Dr., Strählerweg 18, D-7500 Karlsruhe (DE)**
Erfinder: **Ehrfeld, Wolfgang, Dr. Dipl.Phys., Reutstrasse 27, D-7500 Karlsruhe (DE)**
Erfinder: **Krieg, Gunther, Dr. Dipl.Phys., Im Rennich 12, D-7500 Karlsruhe (DE)**
Erfinder: **Bier, Wilhelm, Dr. Dipl.Phys., Grabener Weg 10, D-7514 Eggenstein-Leopoldshafen (DE)**

BUNDESDRUCKEREI BERLIN

## Verfahren zum Herstellen von Trenndüsenelementen zur Trennung gas- oder dampfförmiger Gemische, insbesondere Isotopengemische

Die Erfindung betrifft ein Verfahren zur Herstellung von Platten für den Aufbau von Trenndüsenelementen zur Trennung gasförmiger Gemische, insbesondere Isotopengemische, nach dem Oberbegriff des Anspruchs 1.

Beim Trenndüsenverfahren ist der zu minimalem spezifischem Energieverbrauch führende Gasdruck zu den charakteristischen Abmessungen der Trennstruktur umgekehrt proportional (Chemie Ing. Technik 39 [1967] S. 4). Da die spezifischen Kosten der für die Ausführung des Verfahrens erforderlichen Kompressoren, Rohrleitungen und Ventile mit zunehmendem Gasdruck erheblich abnehmen, muß die Trenndüsenstruktur so klein wie möglich gewählt werden. Einem Einlaßdruck von z. B. 0,5 bar entspricht dabei eine Weite des Abschälschlitzes von nur etwa 10 μm.

Zur Herstellung von Trenndüsen mit besonders kleinen charakteristischen Abmessungen ist es bekannt, diese aus einem Stapel gegenseitig ausgerichteter Folien aufzubauen, deren jede eine Vielzahl von Durchbrüchen von der Querschnittsform des Gaszuführungskanals, der gekrümmten Laval-Düse, des Abschälers und der Abfuhrkanäle aufweist (DE-B-2 009 265). In einer bevorzugten Ausführungsform werden die Durchbrüche in den Folien formgeätzt.

Bei dem in der Praxis bewährten Formätzverfahren (vgl. z. B. Naturwissenschaften 63 [1976] S. 409) kann bei einer Strukturverkleinerung zwar die Strukturdichte auf den Folien erhöht werden, gleichzeitig muß aber zur Erhaltung der relativen Ätzgenauigkeit die Foliendicke vermindert werden. Das optimale Verhältnis von Foliendicke zu engster Durchbruchweite (Aspektverhältnis) liegt beim Formätzverfahren erfahrungsgemäß in der Größenordnung von eins.

Bei dem angestrebten Einlaßdruck ≥ 0,5 bar beträgt die optimale Folienstärke also 10 μm und darunter. Die Bearbeitung und das Manipulieren derart dünner Folien ist nicht einfach und erfordert einen erheblichen fertigungstechnischen Aufwand. Das kleine Aspektverhältnis der nach dem Formätzverfahren hergestellten Folien hat darüber hinaus einen relativ großen, negativen Einfluß von Stapelfehlern auf die Leistung der Trenndüsenelemente zur Folge, da mit kleiner werdendem Aspektverhältnis die Zahl der möglichen Stapelversetzungen pro Schlitzlänge zunimmt. Es besteht somit die Gefahr, daß der eingangs erwähnte Vorteil, der mit der Erhöhung des Gasdruckes bewirkt wird, durch einen größeren Aufwand bei der Herstellung und eine Verminderung der Leistung der Trenndüsenelemente erkauft werden muß.

Der Erfindung liegt die Aufgabe zugrunde, ein Verfahren zur Herstellung von Folien für den Aufbau von Trenndüsenelementen der eingangs genannten Art zu finden, das es gestattet, unter voller Berücksichtigung der erforderlichen engen Toleranzen der Trennstruktur das Aspektverhältnis wesentlich zu erhöhen.

Für die Lösung dieser Aufgabe werden die im Kennzeichen der Patentansprüche enthaltenen Maßnahmen vorgeschlagen, wobei die Folien wegen des angestrebten wesentlich größeren Aspektverhältnisses als »Platten« bezeichnet werden.

Der Erfindung liegt die Erkenntnis zugrunde, daß sich bei der Herstellung von Negativ-Formen der Platten nach dem in Anspruch 1 dargestellten Verfahren wesentlich größere Aspektverhältnisse mit den aus gasdynamischen Gründen zu fordernden relativ kleinen Toleranzen der kritischen Parameter herstellen lassen, als beim Ätzen von Folien, und daß sich diese günstigen Eigenschaften der Negativ-Formen beim Auffüllen mit Positiv-Material praktisch ohne Qualitätsverluste auf die Platten übertragen lassen.

Aus der DE-A-2 227 342 ist zwar ein Verfahren zum Herstellen eines Musters hoher Auflösung bekannt, bei dem auf einer mit Fotolack bedeckten Unterlage durch Belichtung des Fotolacks mit einem Elektronenstrahl, Entfernen der belichteten Bereiche, Aufbringen von Material auf die gesamte, teilweise mit Fotolack abgedeckte Oberfläche und Entfernen des restlichen Fotolacks eine sehr hochaufgelöste Struktur erzeugt werden kann. Für die Unterlage wird ein Trägermaterial aus Siliciumnitrid oder einem anorganischen Film, wie z. B. $Al_2O_3$, oder organische Polymere verwendet. Die Fotolackschicht hat eine Dicke von etwa 0,1 μm. Mit diesen aus der Mikroelektronik stammenden Verfahrensschritten allein lassen sich jedoch keine Platten für den Aufbau von Trenndüsenelementen mit hohem Aspektverhältnis im Sinne der erfindungsgemäßen Aufgabenstellung herstellen.

Als Material für die Negativ-Formen sind verschiedene, z. B. bei der lithographischen Herstellung mikroelektronischer Schaltungen bereits bewährte Kunststoffe (Resists), beispielsweise PMMA (Polymethylmethacrylat), geeignet. Das partielle Entfernen von Material nach der Einwirkung der energiereichen Strahlen kann in diesem Fall beispielsweise durch Herauslösen mit Methylisobutylketon (MIBK) oder mit einer Mischung aus MIBK und Isopropylalkohol (IPA) erfolgen. Das vollständige Entfernen des Negativ-Materials gelingt z. B. mit Chlorbenzol oder Azeton.

Es ist aber auch möglich, zur Herstellung der Negativ-Formen sog. Fotoformglas (modifiziertes Lithiumsilikat) oder Se–Ge-Gläser zu verwenden, bei denen die partielle Herauslösung mit verdünnter Säure oder Lauge erfolgt.

Als energiereiche Strahlung können elektromagnetische Wellen verwendet werden, die zur Erzielung eines ausreichenden optischen Auflösungsvermögens Wellenlängen < 400 nm haben sollen. Besonders hohe Aspektverhältnisse lassen sich mit sog. weichen Röntgenstrahlen erzielen, deren Wellenlänge zwischen 0,1 und 10 nm liegt. Solche Strahlen lassen sich mit geeigneten Röntgenröhren, mit Elektronensynchrotrons oder mit einem durch einen Riesenimpulslaser erzeugten Mikroplasma erzeugen. Beim Elektronensynchrotron läßt sich bei ausreichender Intensität eine besonders gute Parallelität der Strahlung erreichen, die ein besonders hohes Aspektverhältnis zu erzeugen gestattet.

Während man bei der Verwendung elektromagnetischer Strahlen zur Erzeugung der gewünschten Strukturen in bekannter Weise mit Masken arbeitet, kann man bei Verwendung energiereicher Korpuskularstrahlen, insbesondere Elektronenstrahlen, die Strukturen im Negativ-Material auch durch elektromagnetische Steuerung erzeugen.

Zum Auffüllen mit Positiv-Material werden die Negativ-Formen auf einen metallischen Träger aufgebracht, der die Negativ-Formen einseitig abdeckt. Insbesondere wenn die Durchbrüche in den herzustellenden Platten nur geringen oder gar keinen räumlichen Zusammenhang haben, kann es zweckmäßig bzw. notwendig sein, das Negativ-Material zur Herstellung der Negativ-Formen schon vor der Bearbeitung einseitig mit einem Trägermaterial zu einer Verbundplatte zu vereinigen, wobei das Trägermaterial nach dem Auffüllen der Negativ-Formen wieder entfernt wird.

In Fällen, in denen der Einfluß des Trägermaterials während der partiellen Bestrahlung des Negativ-Materials, beispielsweise durch Rückstreuung eines Teils der Strahlung, stören würde, kann es vorteilhaft sein, plattenförmiges Negativ-Material erst nach dem partiellen Bestrahlen, aber vor dem partiellen Entfernen mit dem Trägermaterial zu verbinden.

Das erfindungsgemäße Verfahren wird im folgenden anhand der Zeichungen beispielhaft erläutert:

Die Fig. 1 bis 4 zeigen schematisch die einzelnen Bearbeitungsstufen;

die Fig. 5 zeigt in perspektivischer Darstellung einen Ausschnitt der Negativ-Formen der Trennstruktur;

die Fig. 6 zeigt in perspektivischer Darstellung einen Ausschnitt der fertigen Platte.

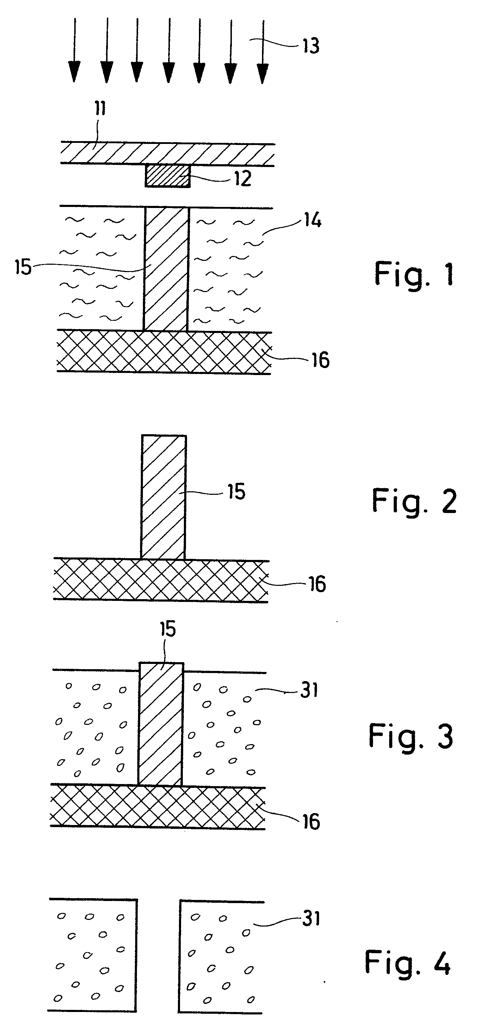

Die Maske gemäß Fig. 1 besteht aus einem die Strahlung nur schwach absorbierenden Träger 11 und den darauf aufgebrachten, die Strahlung stark absorbierenden Strukturen 12. Die Pfeile 13 symbolisieren die Strahlung. Die Gebiete 14 stellen das durch die Bestrahlung löslich gemachte Negativ-Material dar, während die Gebiete 15 den von der Strahlung nicht erreichten und daher unlöslich gebliebenen Bereich des Negativ-Materials bilden. Das plattenförmige Negativ-Material 14, 15 ist mit einer elektrisch leitfähigen Grundplatte 16 verbunden, die durch die Strahlung nicht verändert wird.

Nach dem partiellen Bestrahlen gemäß Fig. 1 werden die bestrahlten Gebiete 14 aus dem Negativ-Material herausgelöst, so daß eine Negativ-Form, bestehend aus dem unbestrahlten Material 15 und dem Träger 16, entsteht (Fig. 2).

In Fig. 3 ist die Negativ-Form gemäß Fig. 2 durch galvanische Abscheidung von Metall 31 auf dem Träger 16 aufgefüllt. Fig. 4 zeigt eine fertige Platte 31 nach dem Entfernen des unbestrahlten Negativ-Materials 15 und des Trägers 16.

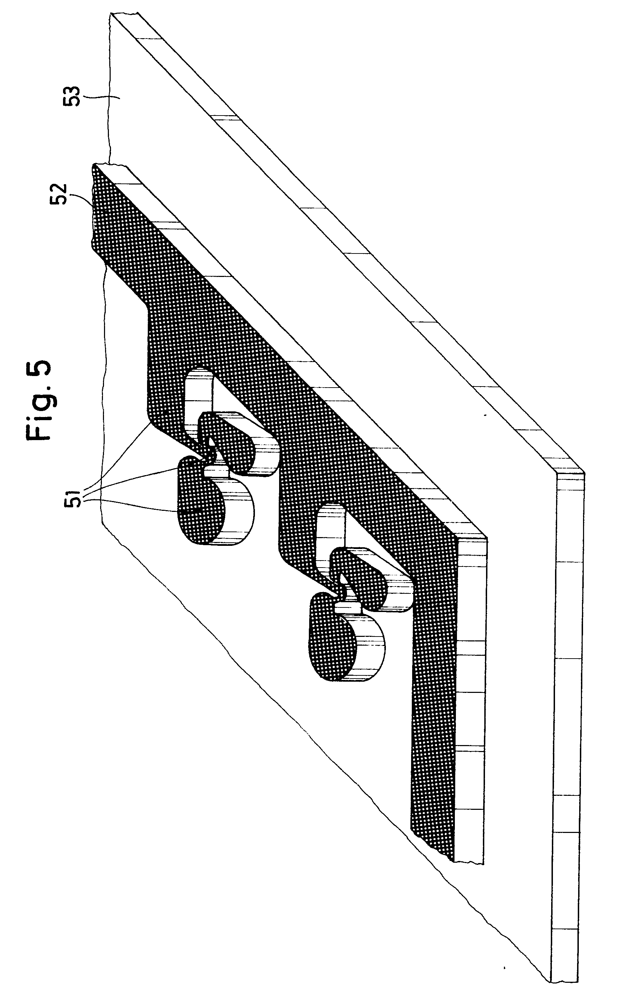

Die Negativ-Form entsprechend dem Verfahrensschritt gemäß Fig. 2 ist in Fig. 5 so dargestellt, daß das Negativ der aus Gaszufuhrkanälen, Trennräumen und Gasabfuhrkanälen bestehenden Trennstrukturen 51, ein hiermit verbundener Rahmen 52 sowie die Trägerplatte 53 zu ersehen sind.

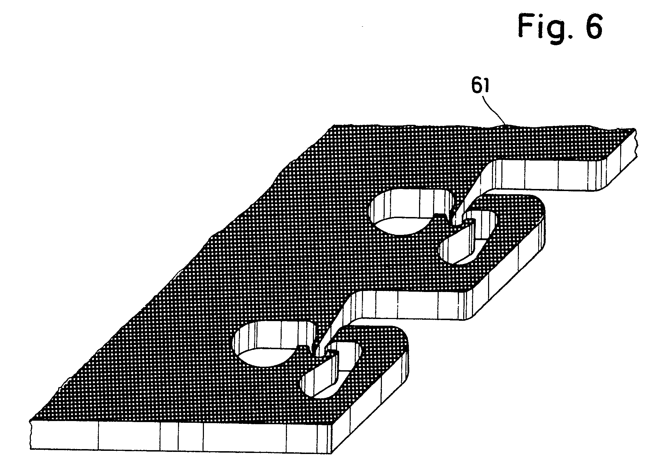

Fig. 6 zeigt die fertige Platte 61 entsprechend dem Verfahrensschritt gemäß Fig. 4.

## Patentansprüche

1. Verfahren zum Herstellen von Platten für den Aufbau von Trenndüsenelementen, bei dem in die Platten Durchbrüche von der Querschnittsform der aus Gaszuführungskanälen, Trennräumen und Gasabführungskanälen bestehenden Trennstrukturen eingearbeitet werden, wobei für die Platten ein für die Durchführung des Trennprozesses geeignetes Material (Positiv-Material) verwendet wird, dadurch gekennzeichnet, daß aus einem durch energiereiche Strahlung in seinen Eigenschaften veränderbaren plattenförmigen elektrisch nichtleitenden Material (Negativ-Material) durch partielles Bestrahlen und partielles Entfernen von Material unter Ausnützung der durch die Bestrahlung erzeugten unterschiedlichen Materialeigenschaften Negativ-Formen der Platten hergestellt werden, deren Aspektverhältnis (Verhältnis von Foliendicke zu engster Durchbruchweite) wesentlich größer als 1 ist, worauf durch galvanische Abscheidung von Metall auf ein elektrisch leitendes, mit dem Negativ-Material verbundenes Trägermaterial die Negativ-Formen aufgefüllt werden, und anschließend das Material der Negativ-Formen entfernt wird.

2. Verfahren nach Anspruch 1, dadurch gekennzeichnet, daß als energiereiche Strahlung elektromagnetische Wellen mit Wellenlängen <400 nm, insbesondere weiche Röntgenstrahlen verwendet werden.

3. Verfahren nach Anspruch 1, dadurch gekennzeichnet, daß als energiereiche Strahlen Korpuskularstrahlen, insbesondere Elektronenstrahlen, verwendet werden.

4. Verfahren nach Anspruch 1, dadurch gekennzeichnet, daß zur Herstellung der Negativ-Formen Verbundplatten aus Negativ-Material und einem Trägermaterial verwendet werden.

5. Verfahren nach Anspruch 1, dadurch gekennzeichnet, daß plattenförmiges Negativ-Material nach dem partiellen Bestrahlen, aber vor dem partiellen Entfernen mit einem Trägermaterial verbunden wird.

## Claims

1. Method of fabricating plates for making up separation nozzle elements, with penetrations provided in the plates having the cross sectional geometry of the separation structures consisting of gas supply ducts, separation spaces and gas evacuation ducts and a material (positive material) used for the plates which is suited for realizing the separation process, characterized by producing from a laminar electric non-conductor (negative material) whose properties are subject to variations by energetic radiation, negative moulds of the plates are fabricated through partial irradiation and partial elimination of material, profiting by the different material properties caused by irradiation the aspect ration (ratio of foil thickness to least width of penetration) being noticeably greater than unity, followed by filling up the negative moulds through electro-plating of metal on an electrically conducting carrier material connected with the negative material and, finally, elimination of the material of the negative moulds.

2. Method according to claim 1, characterized by use of electromagnetic waves as the energetic radiation, wavelength <400 nm, above all soft X-rays.

3. Method according to claim, characterized by the use of corpuscular radiation as the energetic radiation, above all electron radiation.

4. Method according to claim 1, characterized by use of sandwiched plates consisting of negative material and a carrier material for the fabrication of the negative moulds.

5. Method according to claim 1, characterized by connecting the laminar negative material with a carrier material after partial irradiation, although before partial elimination.

## Revendications

1. Procédé pour la fabrication de plaques d'éléments formant des buses séparatrices dans lequel on pratique des passages ayant la forme de la section transversale des structures séparatrices, constituées par des canaux d'arrivée des gaz, des chambres séparatrices et des canaux d'évacuation des gaz, une matière appropriée pour l'exécution de l'opération de séparation (matière positive) étant utilisée pour les plaques, procédé caractérisé en ce que l'on fabrique ces plaques constituant le négatif des moules à partir d'une matière (matière négative) en forme de plaques, non conductrices de l'électricité, dont les propriétés peuvent être modifiées par un rayonnement riche en énergie, par irradiation partielle et élimination partielle de matière, en tirant parti des différences des propriétés de la matière produites par l'irradiation, plaques dont le rapport de concordance (rapport entre l'épaisseur de la feuille et la plus étroite largeur des passages) est sensiblement supérieur à »1« après quoi on remplit les moules négatifs, par dépôt électrolytique, de métal sur une matière support, conductrice de l'électricité, reliée avec la matière négative et ensuite élimine la matière des moules négatifs.

2. Procédé suivant la revendication 1, caractérisé en ce que, comme rayonnement riche en énergie, on utilise des ondes électromagnétiques dont les longueurs d'onde sont inférieures à 400 nm, en particulier des rayons Röntgen mous.

3. Procédé suivant la revendication 1, caractérisé en ce que comme rayons riches en énergie, on utilise des rayons corpusculaires, en particulier des faisceaux d'électrons.

4. Procédé suivant la revendication 1, caractérisé en ce que pour la fabrication des moules négatifs on utilise des plaques composites, faites de matière négative et d'une matière support.

5. Procédé suivant la revendication 1, caractérisé en ce que la matière négative en forme de plaque est reliée avec une matière support après l'irradiation partielle, mais avant l'élimination partielle.

Fig. 1

Fig. 2

Fig. 3

Fig. 4

Fig. 5

Fig. 6